(19) Europäisches Patentamt
European Patent Office
Office européen des brevets

(11) **EP 2 179 153 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **08773569.2**

(22) Anmeldetag: **21.06.2008**

(51) Int Cl.:
***F02B 27/02*** *(2006.01)*

(86) Internationale Anmeldenummer:
**PCT/EP2008/005022**

(87) Internationale Veröffentlichungsnummer:
**WO 2009/010151 (22.01.2009 Gazette 2009/04)**

(54) **BRENNKRAFTMASCHINE**

INTERNAL COMBUSTION ENGINE

MOTEUR À COMBUSTION INTERNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.07.2007 DE 102007033324**

(43) Veröffentlichungstag der Anmeldung:
**28.04.2010 Patentblatt 2010/17**

(73) Patentinhaber: **Dr. Ing. h.c. F. Porsche AG 70435 Stuttgart (DE)**

(72) Erfinder:
• **THEILEMANN, Ludwig**
  **75328 Schömberg (DE)**
• **SCHEIBA, Joachim**
  **75438 Knittlingen-Hohenklingen (DE)**
• **SEILER, Friedrich**
  **75181 Pforzheim (DE)**

(56) Entgegenhaltungen:
**EP-A- 0 790 394     EP-A- 0 987 412
EP-A- 1 217 187**

**Beschreibung**

Die Erfindung betrifft eine Brennkraftmaschine, insbesondere eine fremdgezündete Brennkraftmaschine mit einem Verdichter gemäß dem Oberbegriff des Anspruchs 1.

Beim Betrieb von Brennkraftmaschinen werden üblicherweise Luftansauganlagen verwendet, welche eine Schwing- oder Resonanzrohraufladung oder eine Kombination dieser beiden Aufladungen erzielen. Bei einer aufgeladenen Brennkraftmaschine ergibt sich infolge der Verdichtung der angesaugten Verbrennungsluft eine Anhebung der Lufttemperatur. Eine weitere Aufladung wird vermieden und daher hinter einem Verdichter ein Ladeluftkühler zur Kühlung der Ladeluft positioniert. Hierdurch soll die Gefahr eines klopfenden Motors minimiert werden. Eine weitere Reduzierung der Ladelufttemperatur ist durch einen vergrößerten Ladeluftkühler in der Regel aus baulichen Gründen nicht möglich. Demzufolge werden zur Erhöhung des Wirkungsgrades des Ladeluftkühlers stromab von diesem Entspannungseinrichtungen vorgesehen, um eine Verbrennungslufttemperatur weiter zu reduzieren. Aus der DE 100 02 482 A1 ist beispielsweise eine solche Vorrichtung zur Ladeluftkühlung bekannt, bei der die unter erhöhtem Ladedruck stehende Verbrennungsluft an einem Rückstauventil entspannt wird. Dabei ist das Rückstauventil zwischen dem Ladeluftkühler und der Luftansauganlage der Brennkraftmaschine positioniert.

In der EP 0 987 412 A2 ist eine Sauganlage einer Brennkraftmaschine zur Nutzung von Resonanzeffekten bekannt. Die Sauganlage weist Rohrverbindungen und Rohrabschnitte auf, in denen teilweise Drosselklappen vorgesehen sind, um die Resonanzeffekte bei unterschiedlichen Drehzahlen darzustellen.

Die EP 0 790 394 A2 beschreibt eine Brennkraftmaschine mit veränderbaren Kanallängen der Ansaugkrümmer, um den volumetrischen Wirkungsgrad der darin pulsierenden Ansaugluft zu erhöhen.

In der EP 1 217 187 A1 ist eine variable Kanallänge einer Ansauganlage einer Brennkraftmaschine beschrieben, wobei in Abhängigkeit der Motordrehzahl diese Kanallänge so variiert wird, dass mittels Resonanzfrequenzen ein zusätzlicher Aufladeeffekt bereitgestellt wird.

Aus der DE 36 27 312 A1 ist zur Absenkung der Ladelufttemperatur eine Entspannungssteuervorrichtung bekannt, mit der eine adiabate Teilentspannung der aufgeladenen Luft erzielt wird. Dabei weist die Entspannungssteuervorrichtung einen düsenartigen Leitungsabschnitt auf, der nach Art einer Lavaldüse ausgebildet ist, wobei der düsenartige Leitungsabschnitt in der Ansaugleitung vor der Luftansauganlage angeordnet ist. Die aus dem Stand der Technik bekannten Maßnahmen zur Abkühlung der Ladeluft nach dem Austritt aus dem Ladeluftkühler erfordern die Anordnung einer Entspannungsvorrichtung in der Ansaugleitung und verursachen somit einen zusätzlichen baulichen Aufwand im Motorraum des Fahrzeuges.

Der Erfindung liegt daher die Aufgabe zugrunde, eine aufgeladene Brennkraftmaschine bereitzustellen, bei der eine Entspannung der Ladeluft ohne baulichen Aufwand erzielt werde kann. Diese wird erfindungsgemäß durch eine Vorrichtung mit den Merkmalen des Anspruchs 1 gelöst.

Die erfindungsgemäße Brennkraftmaschine zeichnet sich dadurch aus, dass eine Verteilerrohrlänge in Abhängigkeit von einem äquivalenten Verteilerrohrdurchmesser derart bemessen ist, dass eine Verringerung des Ladedruckes innerhalb der Luftansauganlage der Brennkraftmaschine durch eine Expansion erzielbar ist, wobei die Ladeluftexpansion teilweise im Plenum, im jeweiligen Saugrohr und/oder innerhalb des Verteilerrohres stattfindet. Erfindungsgemäß ist eine kontinuierliche, aber nicht zwingend gleichmäßige, Expansion zwischen dem Eintritt der Verbrennungsluft in das Verteilerrohr und dem Austritt aus dem Saugrohr erzielbar.

Mit der erfindungsgemäßen Ausgestaltung der Luftansauganlage wird durch die erzielte Expansion eine effektive Kühlung der Ladeluft innerhalb der Luftansauganlage ohne den Einsatz von zusätzlichen beweglichen Bauteilen bewirkt. Dadurch wird eine kostengünstige und effiziente Luftansauganlage für aufgeladene Brennkraftmaschinen zur Verfügung gestellt, wobei sich die erfindungsgemäße Expansionsluftansauganlage sowohl für aufgeladene Otto- als auch für Dieselmotoren eignet.

Insbesondere wird durch die vorliegende Erfindung die Neigung eines aufgeladenen Ottomotors zu einer klopfenden Verbrennung minimiert. Somit kann die Verschiebung des Zündwinkels in Richtung Optimum auch bei hohen Drehzahlen erreicht werden, da eine Absenkung der Gemischtemperatur zustande kommt. Denn durch die erfindungsgemäße Luftansauganlage wird eine gasdynamische Kompression stromabwärts des Ladeluftkühlers vermieden und zusätzlich eine Expansion innerhalb der Luftansauganlage mit einer Temperatursenkung der Verbrennungsluft erzielt.

In einer Ausgestaltung der Erfindung ist die Verteilerrohrlänge in Abhängigkeit von einer Nenndrehzahl der Brennkraftmaschine bemessen. Somit wird die vorliegende Luftansauganlage bei aufgeladenen Brennkraftmaschinen optimal eingesetzt und eine gezielte Abstimmung, insbesondere bei Sportfahrzeugen, für höhere Lastpunkte und Drehzahlen ermöglicht.

In einer weiteren Ausgestaltung der Erfindung erfolgt die Ausbildung der Verteilerrohrlänge in Abhängigkeit von dem äquivalenten Verteilerrohrdurchmesser derart, dass ein Verhältnis von äquivalentem Verteilerrohrdurchmesser zu Verteilerrohrlänge von 0,05 bis 0,14 vorliegt. Dabei sollte die Saugrohrlänge nicht mehr als 200 mm oder 150 mm, insbesondere bei einer Nenndrehzahl zwischen 5500 und 7000 Umdrehungen pro Minute, bemessen sein. Vorzugsweise beträgt dabei das Verhältnis von äquivalentem Verteilerrohrdurchmesser zu Verteilerrohrlänge 0,066, 0,114 oder 0,136. Hierdurch kommt innerhalb der Luftansauganlage eine optimierte Expansion der verdichteten Verbrennungsluft zustande, so dass die Verbrennungsluft aus der Luftansauganlage mit einer deutlich niedrigeren Temperatur in den Einlasskanal im Zylinderkopf gelangt.

Durch die neuartige geometrische Bestimmung des Verteilerrohrs der Luftansauganlage liegt im Vergleich zu den üblichen Sauganlagen ein Verteilerrohr mit einem kleinen Durchmesser vor, so dass der bauliche Aufwand im Motorraum optimiert wird. Die erfindungsgemäße Luftansauganlage kehrt durch die erfindungsgemäße Bemessung den bekannten Resonanzaufladeeffekt, insbesondere bei hohen Motordrehzahlen, komplett um. Anstelle einer Kompression wird eine Expansion der Verbrennungsluft erzielt und diese weiter abgekühlt. Somit liegt eine niedrigere Temperatur des Brennstoff/Luft-Gemisches im Brennraum vor, so dass der Zündzeitpunkt der Brennkraftmaschine leistungsoptimal einstellbar ist. Daher kann eine Verbesserung des Motorwirkungsgrades und gleichzeitig eine höhere Motorleistung in Verbindung mit einem günstigen Kraftstoffverbrauch, insbesondere bei hohen Lasten und Drehzahlen bewerkstelligt werden.

In einer weiteren Ausgestaltung der Erfindung weist die Brennkraftmaschine eine oder zwei Zylinderreihen auf, wobei die Anzahl der Zylinder insgesamt sechs beträgt. Gemäß der Erfindung hat sich bei einer fremdgezündeten 6-Zylinder-Brennkraftmaschine der Boxerbauart gezeigt, dass die vorliegende Luftansauganlage zu einer deutlichen Wirkungsgradverbesserung führt. Dennoch eignet sich die vorliegende Luftansauganlage ebenfalls für Brennkraftmaschinen mit vier Zylindern.

In einer Ausgestaltung der Erfindung sieht die vorliegende Erfindung zur weiteren Verbesserung der Zylinderfüllung, insbesondere bei aufgeladenen fremdgezündeten Brennkraftmaschinen, eine zusätzliche Erhöhung des Ladedruckes durch den Verdichter vor, um den verminderten Ladedruckbetrag durch die innerhalb der Luftansauganlage erzielte Expansion auszugleichen. Vorzugsweise wird ein höher Ladedruck um 5 bis 15 % als die üblichen Ladedrücke eingestellt. Dabei liegen die üblichen Ladedrücke zwischen 0,9 bar und 1,5 bar.

Durch einen höher eingestellten Ladedruck steigt nach dem Verdichter die Verbrennungslufttemperatur an, so dass durch das höher eingestellte Temperaturniveau der Verbrennungsluft im Ladeluftkühler eine größere Wärmemenge abgeführt wird. Gemäß der Erfindung liegt eine höhere Temperaturdifferenz über den Ladeluftkühler um etwa 5 bis 15 % als bei üblichen Ladedrücken vor. Dadurch kommt nach dem Ladeluftkühler eine Verbrennungslufttemperatur zustande, die nur geringfügig höher liegt als die mit einer üblichen bzw. konventionellen Aufladung, da die abgeführte Wärmemenge am Ladeluftkühler zwischen 3 und 10 % höher liegt als bei üblichen Ladedruckverhältnissen. Der hier durch den Einsatz der erfindungsgemäßen Luftansauganlage zusätzlich erzielte thermische Gewinn führt zu einer niedrigeren Temperatur des Brennstoff/Luft-Gemisches im Brennraum, da sowohl das Druck- als auch das Temperaturniveau im Brennraum zum Einlassventilschließzeitpunkt zwischen 3 und 4 % niedriger liegt als bei üblichen Luftansauganlagen. Folglich kann bei einem Sportfahrzeug mit einem aufgeladenen Motor, insbesondere bei hohen Lastpunkten und Drehzahlen, bei gleicher Motorleistung ein günstiger Kraftstoffverbrauch oder eine höhere Motorleistung beim gleichen Kraftstoffverbrauch erzielt werden.

In einer weiteren vorteilhaften Ausgestaltung der Erfindung erfolgt bei der erfindungsgemäßen Brennkraftmaschine durch den Einsatz eines Abgasturboladers mit einer verstellbaren Turbinengeometrie in Verbindung mit der erfindungsgemäßen Expansionsluftansauganlage eine ständige Anpassung der erzielten Expansion der Verbrennungsluft innerhalb der Luftansauganlage an den Betriebszustand des Motors. Hierdurch kann bei der erfindungsgemäßen Brennkraftmaschine eine Optimierung des Zündzeitpunktes und daher eine weitere Wirkungsgradverbesserung erreicht werden.

Weitere Merkmale und Merkmalkombinationen ergeben sich aus der Beschreibung. Konkrete Ausführungsbeispiele der Erfindung sind in den Zeichnungen vereinfacht dargestellt und in der nachfolgenden Beschreibung näher erläutert. Dabei zeigen:

Fig. 1     eine Abbildung einer erfindungsgemäßen Luftansauganlage einer aufgeladenen Brennkraftmaschine mit in zwei Reihen angeordneten Zylindern,

Fig. 2     eine schematische Darstellung der Luftansauganlage nach Fig. 1 gemäß einem ersten Ausführungsbeispiel,

Fig. 3     eine schematische Darstellung der Luftansauganlage nach Fig. 1 gemäß einem zweiten Ausführungsbeispiel,

Fig. 4     eine schematische Darstellung einer erfindungsgemäßen Luftansauganlage einer Brennkraftmaschine mit in einer Reihe angeordneten Zylindern gemäß einem dritten Ausführungsbeispiel ,

Fig. 5     eine schematische Darstellung der Luftansauganlage nach Fig. 4 gemäß einem vierten Ausführungsbeispiel,

Fig. 6     eine schematische Darstellung der Luftansauganlage nach Fig. 1 gemäß einem fünften Ausführungsbeispiel,

Fig. 7     eine schematische Darstellung der Luftansauganlage nach Fig. 4 gemäß einem sechsten Ausführungsbeispiel,

Fig. 8     ein schematisches Diagramm vom Druck-, Temperatur- und Massenstromverlauf innerhalb der Luftansauganlage der erfindungsgemäßen Brennkraftmaschine,

Fig. 9     ein schematische Abbildung der Abmessungsverhältnisse der Luftansauganlage der erfindungsgemäßen Brennkraftmaschine,

Fig. 10    ein schematische Darstellung der Ladungstemperatur im Brennraum einer Brennkraftmaschine,

Fig. 11    eine schematische Darstellung der Auswirkung der Luftansauganlage nach Fig. 1 auf die Motorleistung einer Brennkraftmaschine und

Fig. 12    eine schematische Darstellung der Temperaturwerte der Zylinderladung im Brennraum einer erfindungsgemäßen Brennkraftmaschine zum Zeitpunkt "Einlassventil-Schließt" in Abhängigkeit von der eingestellten Drehzahl.

Eine Brennkraftmaschine 1 mit Aufladung weist mindestens einen Zylinder 2 auf, in dem ein nicht dargestellter Brennraum zwischen einem im Zylinder 2 längsverschieblich gehaltenen Kolben und einem Zylinderkopf gebildet ist. Die Brennkraftmaschine 1 saugt Verbrennungsluft durch einen Verdichter 8 an. Die Aufladung der Brennkraftmaschine 1 kann im Sinne der Erfindung durch einen Verdichter 8 zustande kommen, der als Bestandteil eines Abgasturboladers, eines mechanischen Kompressors oder eines elektrischen Kompressors ausgebildet ist. Durch die Kompression der Verbrennungsluft steigt die Ladelufttemperatur an. Um diese zu reduzieren, ist dem Verdichter 8 ein Ladeluftkühler 9 nachgeschaltet.

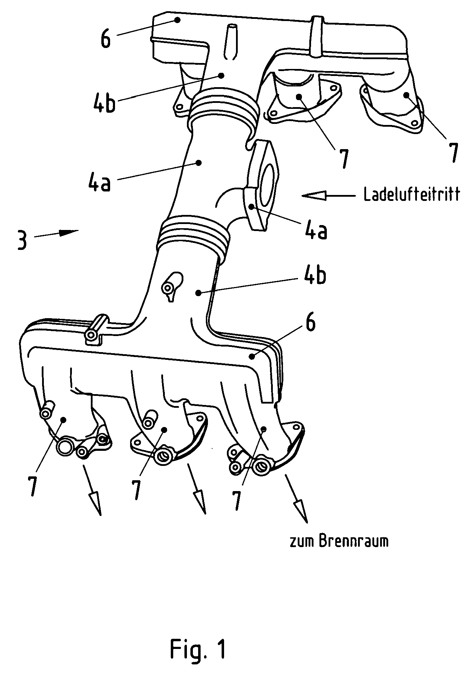

In Fig. 1 ist eine gemäß der Erfindung ausgebildete Luftansauganlage 3 abgebildet, bei der Ladeluft in ein Verteilerrohr 4 durch einen Luftführungskanal 5 gefördert wird. Die in Fig. 1 dargestellte Luftansauganlage 3 ist für eine Brennkraftmaschine 1 mit zwei Zylinderreihen derart ausgebildet, dass für jede Zylinderreihe ein Ansaugkrümmer bzw. Plenum 6 vorgesehen ist. Es sind an jedem Plenum 6 pro Zylinderreihe drei Saugrohre 7 vorgesehen, über die die Ladeluft dem nicht dargestellten Einlasskanal im Zylinderkopf und anschließend dem Brennraum zuführbar ist. Beide Plenen 6 sind an einem zentralen Verteilerrohr 4 angeschlossen. Dabei ist das jeweilige Plenum 6 mit den Saugrohren 7 einstückig ausgebildet. Gemäß der vorliegenden Erfindung ist zwischen den beiden Plenen 6 ein Verteilerrohr 4 angeordnet, das im vorliegenden Ausführungsbeispiel aus einem Verteilermodul 4a und aus zwei Rohrabschnitten 4b gebildet ist, welche mit dem jeweiligen Plenum einstückig ausgebildet sind. Die Anbindung kann mit Hilfe von Bandschellen oder mit einem bajonettähnlichen Verschluss erfolgen.

Erfindungsgemäß ist eine Verteilerrohrlänge $L_V$ in Abhängigkeit von einem äquivalenten Verteilerrohrdurchmesser $D_V$ derart bemessen, dass eine Verringerung des Ladedruckes der Verbrennungsluft innerhalb der Luftansauganlage 3 durch eine gezielte Expansion erfolgt, wobei die Expansion teilweise im Plenum und/oder innerhalb des Verteilerrohres stattfindet. Erfindungsgemäß findet die Expansion in einem Bereich zwischen einem Eintritt der Verbrennungsluft in das Verteilerrohr 4, z.B. ab dem Verteilermodul 4a, und einem Austritt aus dem Saugrohr 7 statt. Je nach Zündfolge der jeweiligen Zylinder 2 tritt innerhalb der Luftsauganlage eine Schwingung auf, wobei die Expansion der Ladeluft auf den jeweiligen Brennraum bezogen kontinuierlich innerhalb der Luftansauganlage, aber nicht zwingend gleichmäßig, erzielbar ist. Dadurch kann die Ladelufttemperatur beim Eintritt in den Brennraum und somit die Brennstoff/Luft-Gemischtemperatur im Brennraum abgesenkt werden, so dass die Motorleistung bei gleichzeitiger Absenkung des spezifischen Kraftstoffverbrauches gesteigert werden kann.

Gemäß der vorliegenden Erfindung wird die schwingende Luft im Ansaugtrakt während der kühleren Expansionsphase für die Gemischaufbereitung angesaugt, wodurch die Temperatur des Brennstoff/Luft-Gemisches im Brennraum reduziert wird. Das bedeutet eine deutliche Steigerung der Effizienz: Bei maximaler Leistung eines Sechs-Zylinder-Boxermotor wird eine Verringerung des Kraftstoffverbrauchs um etwa 15 Prozent erreicht.

Die vorliegende Erfindung zeichnet sich dadurch aus, dass die hier beschriebene Expansionssauganlage 3 sich für Brennkraftmaschinen 1 mit sechs oder vier Zylindern gut eignet. Für einen aufgeladenen Sechs-Zylinder-Motor ist die Verteilerrohrlänge $L_V$ durch folgende Formel zu bestimmen:

$$200 - 4/3 * L_S + 1{,}7 * n_N^{-2{,}22} * (D_V - 30) < L_V < 7{,}2*10^6 / n_N - 1{,}5*L_S$$

Bei einem aufgeladenen Vier-Zylinder-Motor ist der Bereich für die Verteilerrohrlänge $L_V$, in dem die Expansionssauganlage vorteilhafte Ergebnisse erzielen kann, durch folgende Formel bestimmt:

$$34*D_V - 650 - 4/3*L_S < L_V$$

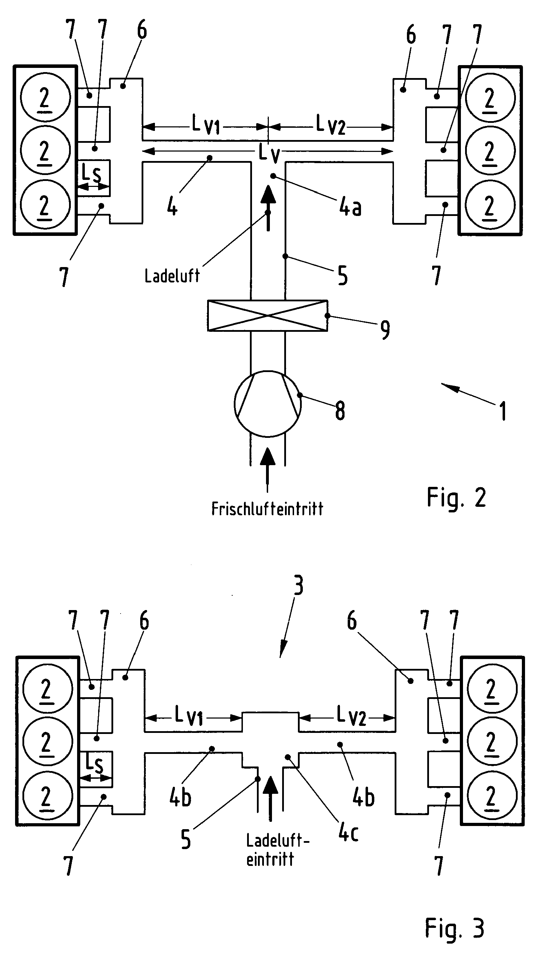

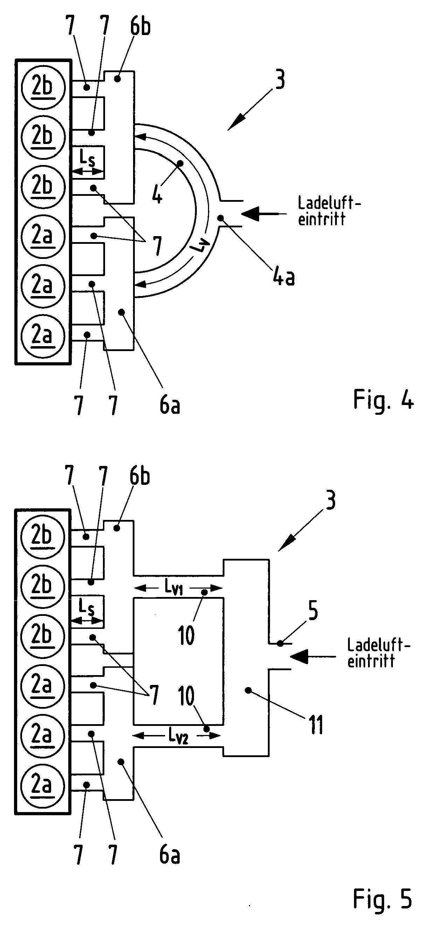

Dabei entspricht $L_S$ einer Saugrohrlänge zwischen dem Plenum 6 und dem nicht dargestellten Zylinderkopf. Der Wert $L_V$ steht für die Verteilerrohrlänge, wobei diese sich je nach Ausführungsbeispiel unterschiedlich zu bestimmen ist. $L_V$ ist die Rohrlänge des Verbindungsrohres zwischen dem ersten und dem zweiten Plenum 6. Bei den Ausführungsbeispielen mit dem Behälter 4c bzw. 11 gemäß Fig. 3 bzw. 5 ist $L_V$ die Summe der Verteilerrohrabschnitte $L_V = L_{V1} + L_{V2}$. Weiterhin entspricht $n_N$ eine Nenndrehzahl der Brennkraftmaschine, bei der eine maximale Leistung erzielt wird.

Bei einem Verteilerrohr 4 mit veränderlicher Querschnittsfläche $A_V(x)$ ist das Innenvolumen $V_V$ des Verbindungsrohres durch folgende Formel zu bestimmen:

$$V_V = \int A_V(x)\,dx \quad , \text{ wobei } A_M = V_V/L_V$$

Dabei ist x die Wegkoordinate entlang einer Rohrmittellinie. Bereiche, in denen $A_V(x)$ größer ist als die doppelte mittlere Querschnittsfläche AM werden nicht als Rohr, sondern als Behälter gewertet und gehen nicht in die Berechnungen der Rohrlänge $L_V$ und des äquivalenten Verbindungsrohrdurchmessers $D_V$ ein.
Daraus ergibt sich der äquivalente Verbindungsrohrdurchmesser $D_V$ nach der Formel:

$$D_V = \sqrt{4 A_M / \pi}$$

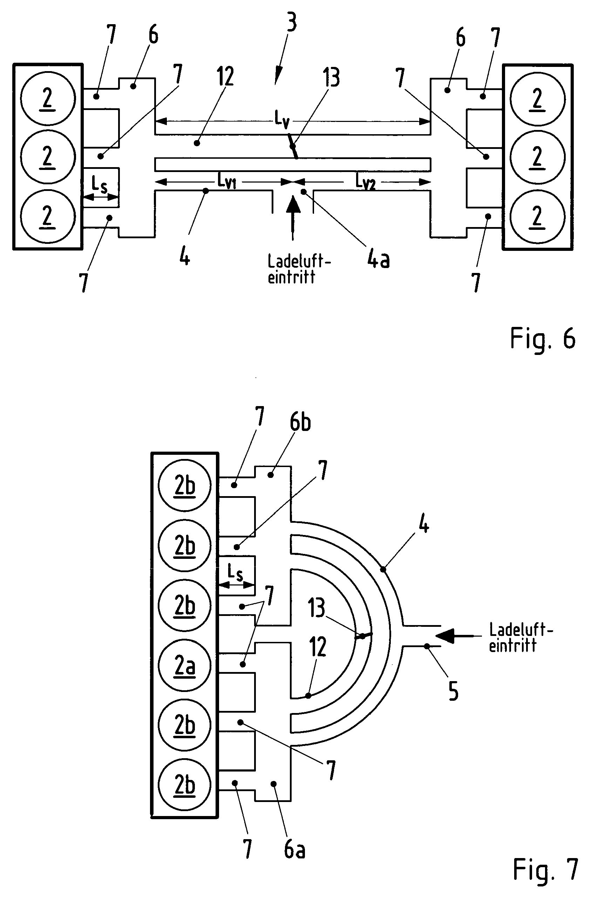

Bei dem ersten Ausführungsbeispiel gemäß Fig. 2 ist die Verteilerrohrlänge $L_V$ gleich dem Abstand zwischen den beiden Plenen 6 zu setzen. Bei dem zweiten Ausführungsbeispiel gemäß Fig. 3 setzt sich die Verteilerrohrlänge $L_V$ aus den Längen der beiden Abschnitten $L_{V1}$ und $L_{V2}$ zusammen, wobei beim dritten Ausführungsbeispiel gemäß Fig. 4 die Verteilerrohrlänge der Bogenlänge des Verteilerrohres entspricht. Bei dem vierten Ausführungsbeispiel gemäß Fig. 5 setzt sich die Verteilerrohrlänge $L_V$ aus den beiden Abschnittslängen $L_{V1}$ und $L_{V2}$ zusammen. Bei dem fünften Ausführungsbeispiel ist gemäß Fig. 6 die Verteilerrohrlänge $L_V$ gleich dem Abstand zwischen den beiden Plenen 6 zu setzen, wobei beim sechsten Ausführungsbeispiel gemäß Fig. 7 die Verteilerrohrlänge der Bogenlänge des Verteilerrohres entspricht.
Gemäß der Erfindung ergeben sich bei einer Auslegung der Expansionssauganlage 3 in Anlehnung an die obigen Formel vorteilhafte niedrige Temperaturen an der Einlassöffnung des Brennraumes. Insbesondere bei einer Verteilerrohrlänge von etwa 440 mm und einem äquivalenten Verteilerrohrdurchmesser $D_V$ von 50 oder 60 mm bzw. zwischen 50 und 60 mm sind hohe Expansionsgrade einstellbar. Dabei weisen die Saugrohre 7 eine Länge $L_S$ auf, die unterhalb 200 oder 150 mm liegt, vorzugsweise zwischen 110 und 140 mm. Demnach ist die Ausgestaltung der Verteilerrohrlänge $L_V$ in Abhängigkeit vom äquivalenten Verteilerrohrdurchmesser $D_V$ so zu wählen, dass sich ein Verhältnis von äquivalentem Verteilerrohrdurchmesser $D_V$ zu Verteilerrohrlänge $L_V$ in einem Bereich von 0,05 bis 0,14, insbesondere in einem Bereich von 0,06 bis 0,13 ergibt. Es hat sich dabei gezeigt, dass bei einem Sechs-Zylinder-Motor Verhältnisse von 0,066, 0,114 oder 0,136 bzw. Verhältnisse, die zwischen diesen Werten liegen, zu optimalen Ergebnissen im Sinne der vorliegenden Erfindung geführt haben, insbesondere wenn die Saugrohrlänge $L_S$ kürzer als 150 mm beträgt.
Die hier beschriebene Brennkraftmaschine 1 arbeitet nach dem Vier-Takt-Prinzip, wobei sich die vorliegende Erfindung ebenfalls für Zwei-Takt-Brennkraftmaschinen eignet. Die Längsbewegung des Kolbens erstreckt sich zwischen einem oberen Totpunkt OT und einem unteren Totpunkt UT. Im ersten Ansaugtakt der Vier-Takt-Brennkraftmaschine 1 wird dem Brennraum durch einen Einlasskanal bzw. ein Saugrohr 7 Verbrennungsluft zugeführt, wobei der Kolben sich in einer Abwärtsbewegung bis zu einem unteren Gaswechsel-Totpunkt bewegt. In einem nachfolgenden Kompressionstakt bewegt sich der Kolben in einer Aufwärtsbewegung bis zu einem oberen Zünd-Totpunkt ZOT, um den die Zündung vorgenommen wird. Danach expandiert der Kolben in einer Abwärtsbewegung bis zu einem unteren Totpunkt, wobei in einem letzten Takt der Kolben in einer Aufwärtsbewegung bis zu einem oberen Gaswechsel-Totpunkt LW-OT die Gase aus dem Brennraum ausschiebt.

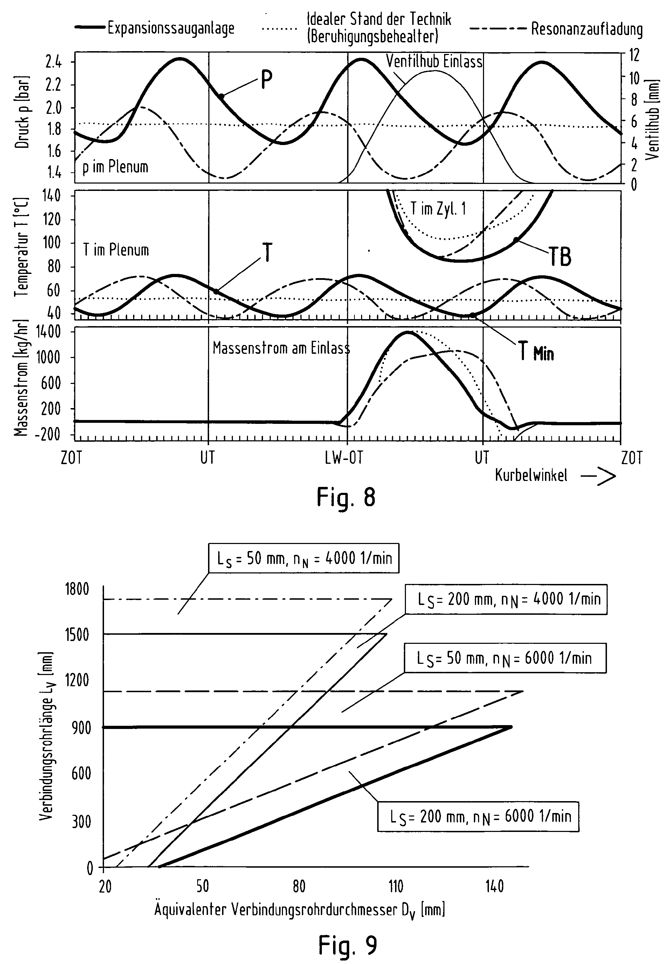

Die in Fig. 2 gezeigten Plenen 6 sind mit dem Verteilerrohr 4 verbunden, wobei dieses Verteilerrohr 4 derart ausgebildet ist, dass die Verbrennungsluft dem jeweiligen Brennraum zu einem Zeitpunkt zugeführt wird, zu dem im Plenum 6 ein Ladeluftdruck herrscht, der niedriger ist als der Ladeluftdruck, der im Luftführungskanal 5 herrscht. Zur Verdeutlichung des erzielten Effektes durch die erfindungsgemäße Luftansauganlage 3 sind in Fig. 8 einige Luftzustandsverläufe im Plenum 6 bzw. im Saugrohr 7 der Brennkraftmaschine 1 dargestellt. Wie im oberen Diagramm gemäß Fig. 8 zu sehen ist, wird ein maximaler Ventilhub am Einlass in einer zweiten Hälfte des Ansaugtaktes eingestellt, d.h., zwischen dem oberen Ladungswechsel-Totpunkt LW-OT und dem unteren Totpunkt UT. Wie im mittleren Diagramm in Fig. 8 dargestellt ist, weist die Temperatur der Verbrennungsluft in der zweiten Hälfte des Ansaugtaktes durch die Expansion im Plenum 6 einen minimalen Temperaturwert $T_{min}$ auf. Die vorliegende Erfindung zeichnet sich dadurch aus, dass die erfindungsgemäße Luftansauganlage 3 derart ausgelegt ist, dass zum Zeitpunkt der Verbrennungsluftansaugung innerhalb der Luftansauganlage 3, insbesondere im Plenum 6 sowie in den Saugrohren 2, eine gasdynamische Expansion herrscht. Dadurch weist die Verbrennungsluft im wesentlichen eine niedrige Temperatur $T_{min}$ auf, wenn die Verbrennungsluft in den Brennraum einströmt.
Gemäß Fig. 3 ist ein zweites Ausführungsbeispiel dargestellt, bei dem in der Mitte des Verteilerrohres 4 anstelle des Verteilermoduls 4a ein Behälter 4c vorgesehen ist. Gemäß diesem Ausführungsbeispiel setzt sich die Verteilerrohrlänge $L_V$ aus den Abständen zusammen, die zwischen dem jeweiligen Plenum 6 und dem Behälter 4c liegen. Nach einem dritten Ausführungsbeispiel gemäß Fig. 4 weist die erfindungsgemäße Brennkraftmaschine 1 ebenfalls sechs Zylinder auf, welche in Reihe angeordnet sind. Dabei ist die Luftansauganlage 3 derart ausgebildet, dass die Verbrennungsluft derart aufgeteilt wird, dass für die drei vorderen Zylinder 2a ein erstes Plenum 6a vorgesehen ist, wobei für die übrigen drei Zylinder 2b ein zweites Plenum 6b vorgesehen ist. Hierzu ist das Verteilerrohr 4 bogenförmig ausgebildet, wobei die Verteilerrohrlänge LV der Bogenlänge entspricht. Gemäß der Erfindung kann das Verteilerrohr 4 je nach Zylinderanordnung und Motorbauweise im Rahmen des Erfindung in jeder denkbaren Form, z.B. bogenförmig, gerade oder eckig bzw. als eine Kombination aus unterschiedlichen Formen, ausgebildet sein.

Eine abgewandelte Form des dritten Ausführungsbeispiels ist in Fig. 5 gemäß einem vierten Ausführungsbeispiel dargestellt, wobei hier das Verteilerrohr 4 in zwei Abschnitten aufgeteilt ist, wobei zwischen dem Luftführungskanal 5 und den jeweiligen Verteilerrohrabschnitten 10 ein Behälter 11 positioniert ist. Bei diesem Ausführungsbeispiel setzt sich die Verteilerrohrlänge $L_V$ aus den beiden Verteilerrohrabschnittslängen $L_{V1}$ und $L_{V2}$ zusammen.

Nach einem fünften Ausführungsbeispiel der Erfindung gemäß Fig. 6 ist zwischen den Plenen 6 ein zusätzliches Verteilerrohr 12 angeordnet, das durch ein Schaltelement, hier als Klappe 13 ausgebildet, in Abhängigkeit von den Motorparametern zugeschaltet werden kann. Durch die im zusätzlichen Verteilerrohr 12 angeordnete Schaltklappe 13 ist die Größe des äquivalenten Verteilerdurchmessers $D_V$ einstellbar. Dadurch kann die erzielbare Expansion der Ladeluft in Abhängigkeit von der Drehzahl der Brennkraftmaschine 1 eingestellt werden. Die Anordnung eines zusätzlichen Verteilerrohrs 12 mit einer Schaltklappe 13 ist bei allen vorher beschriebenen Ausführungsbeispielen ebenfalls denkbar. Dabei ist je nach Form des Verteilerrohres ein oder zwei zusätzliche Verteilerrohre 12 an den entsprechenden Stellen zur Einstellung der Größe des äquivalenten Verteilerdurchmessers $D_V$ zu positionieren. Die in Fig. 7 abgebildete sechste Ausführungsform stellt eine abgewandelte Form der fünften Ausführungsform aus Fig. 4 dar.

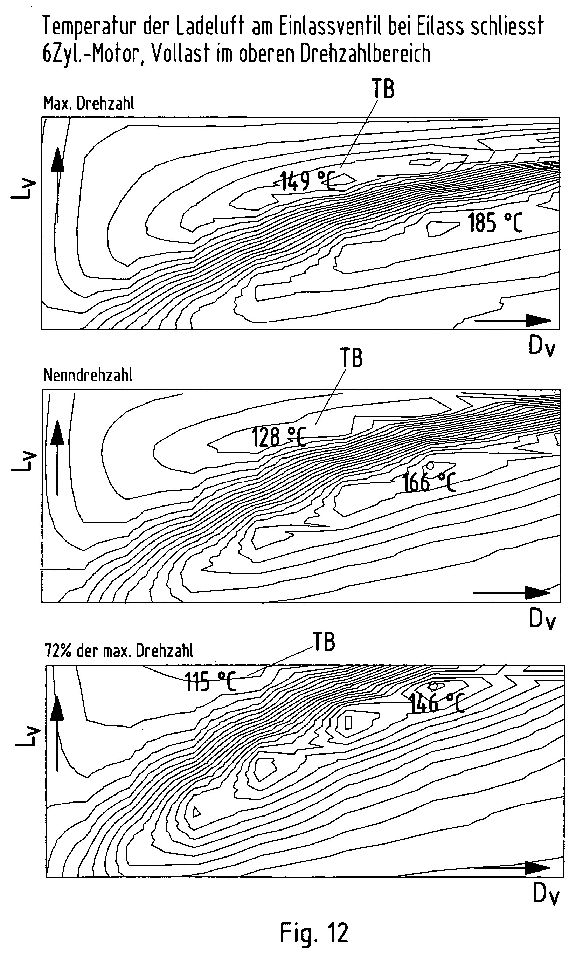

In Fig. 12 sind beispielhafte Verläufe der Ladungstemperatur $T_B$ im Brennraum nach Ende des Einströmens der expandierten Ladeluft in den Brennraum dargestellt. In den drei Abbildungen aus Fig. 12 sind unterschiedliche Temperaturwerte in Abhängigkeit von der Drehzahl der Brennkraftmaschine 1 dargestellt. Somit kann durch das zusätzliche schaltbare Verteilerrohr 12 in Abhängigkeit von den Betriebsparametern der Brennkraftmaschine, wie die Drehzahl, ein bestimmter äquivalenter Verteilerdurchmessers $D_V$ eingestellt und somit eine abgestimmte Expansion der Ladeluft erreicht werden. Demzufolge wird die Einstellung einer niedrigsten Temperatur der Ladeluft zum Eintrittszeitpunkt in den Brennraum in Abhängigkeit von den Betriebsparametern ermöglicht, so dass ein optimaler Wirkungsgrad bei dem jeweiligen Betriebspunkt der Brennkraftmaschine 1 vorliegt.

Die erfindungsgemäße Expansionssauganlage 3 und deren Ausgestaltung ist im Folgenden mit weiteren Einzelheiten näher erläutert. Die schematische Darstellung der in Fig. 9 dargestellten Abmessungsverhältnisse der Luftansauganlage 3 nach Fig. 1 sind in Anlehnung an die Temperaturverläufe der Ladeluft in Fig. 12 abgeleitet. Dabei stellen die in Fig. 9 dargestellten Dreiecke die Temperaturbereiche mit den niedrigen Temperaturwerten der Ladeluft aus Fig. 12 dar. Hier ist die Verteilerrohrlänge $L_V$ in Abhängigkeit von dem äquivalenten Verteilerrohrdurchmesser $D_V$ derart zu wählen, dass sich ein Schnittpunkt innerhalb eines der in Fig. 9 abgebildeten Dreiecke ergibt. Mit einer solchen Auslegung ergibt sich bei der erfindungsgemäßen Expansionssauganlage 3 am Einlass des Brennraumes eine entsprechende Ladelufttemperatur $T_{Min}$ gemäß Fig. 12.

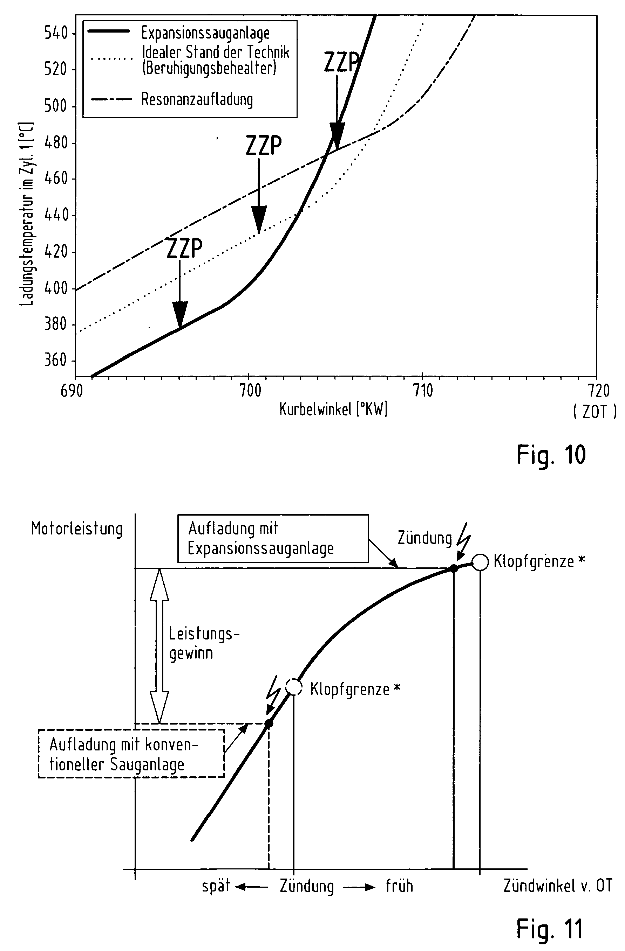

Die geometrische Ausgestaltung der Luftansauganlage 3 führt zu einer derartigen Ladeluftexpansion, dass die Expansionsphase der Ladeluftschwingung in der zweiten Hälfte des zweiten Ansaugvorgangs gemäß Fig. 8, oberes Diagramm, liegt. In der zweiten Hälfte des Ansaugvorganges kommen gemäß Fig. 8 bei der Expansionsphase die niedrigsten Temperaturwerte der Ladeluft zustande. Durch die relativ kalten angesaugten Luftmassen ergibt sich dann erfindungsgemäß eine Brennraumzylinderfüllung mit einer relativ niedrigeren Temperatur. Dieser Effekt bewirkt eine Verschiebung der Klopfgrenze in Richtung früh gemäß Fig. 11, so dass eine frühere Zündung ermöglicht wird.

Folglich kann die Motorleistung erhöht werden, indem der Zündzeitpunkt der Brennkraftmaschine 1 früher eingestellt wird als bei einer wärmeren Zylinderfüllung. Dies führt zu einem wesentlichen Leistungsgewinn. Denkbar ist durch die erzielte geringere Klopfneigung eine Anhebung des Verdichtungsverhältnisses der Brennkraftmaschine.

Um die erzielte Expansion in der Luftansauganlage 3 zu kompensieren, wird durch den Verdichter 8 ein angepasster Ladedruck eingestellt, der höher liegt als bei konventionellen aufgeladenen Brennkraftmaschinen. Eine Erhöhung des Ladedruckes mit der vorliegenden Expansionssauganlage 3 kann beispielsweise zwischen 0,15 und 0,3 bar höher als bei konventionellen Sauganlagen betragen. Durch eine solche Ladedruckerhöhung ergibt sich eine Ladelufttemperaturerhöhung um ca. 10 Grad vor dem Ladeluftkühler 9, wobei nach dem Ladeluftkühler 9 eine Ladelufttemperaturerhöhung von etwa 2 bis 3 Grad gemessen wird.

Demnach wird durch die eingestellte Expansion eine weitere Reduzierung der Ladelufttemperatur bewirkt, so dass am Einlass des Brennraumes unter Beibehaltung des gewünschten Ladedruckniveaus eine niedrige Ladelufttemperatur als die üblichen Temperaturen gemäß Fig. 8 und 10 vorliegt. Daher wird der höhere Luftdurchsatz in den Brennraum beibehalten und gleichzeitig eine Leistungssteigerung durch die Verschiebung der Klopfgrenze der Brennkraftmaschine 1 gemäß Fig. 10 und 11 erzielt.

Die Erfindung betrifft eine aufgeladene Brennkraftmaschine 1 mit mehreren Zylindern 2 und einer Luftansauganlage 3, wobei die Luftansauganlage 3 aus mindestens einem Verteilerrohr 4 mehreren Saugrohren 7 und zwei Plenen 6 gebildet ist, wobei das jeweilige Plenum 6 zwischen dem Verteilerrohr 4 und den Saugrohren 7 positioniert ist. Dabei wird die Verbrennungsluft zur Luftansauganlage 3 über einen Luftführungskanal 5 gefördert, der in das Verteilerrohr 4 mündet, wobei der Ladedruck der Verbrennungsluft nach dem Austritt aus dem Verdichter 8 bis zum Eintritt in den Brennraum der Brennkraftmaschine 1 verringert wird.

Erfindungsgemäß ist eine Verteilerrohrlänge $L_v$ in Abhängigkeit von einem äquivalenten Verteilerrohrdurchmesser $D_v$ derart bemessen, dass eine Verringerung des Ladedruckes innerhalb der Luftansauganlage 3 durch eine Expansion erzielbar ist, wobei die Expansion im Plenum, im jeweiligen Saugrohr 7 und/oder innerhalb des Verteilerrohres 4 stattfindet. Dabei eignet sich die Erfindung für Motoren der Boxerbauart mit vier oder sechs Zylindern, insbesondere für Boxermotoren mit einem Abgasturbolader, der verstellbare Turbinengeometrie umfasst.

## Patentansprüche

1. Brennkraftmaschine (1) mit mehreren Zylindern (2), einer Luftansauganlage (3), einem Verdichter (8) zur Förderung der Verbrennungsluft, und einem im Zylinder (2) angeordneten Brennraum, der zwischen einem Kolben und einem Zylinderkopf begrenzt ist, wobei

   - die Luftansauganlage (3) aus mindestens einem Verteilerrohr (4), mehreren Saugrohren (7) und mindestens einem Plenum (6) gebildet ist, wobei das Plenum (6) zwischen dem Verteilerrohr (4) und den Saugrohren (7) positioniert ist, wobei
   - die Verbrennungsluft zur Luftansauganlage (3) über einen Luftführungskanal (5) gefördert wird, der in das Verteilerrohr (4) mündet, und
   - der Ladedruck (p) der Verbrennungsluft nach dem Austritt aus dem Verdichter (8) bis zum Eintritt in den Brennraum der Brennkraftmaschine (1) verringert wird,
   **dadurch gekennzeichnet, dass**
   - eine Verteilerrohrlänge (Lv) in Abhängigkeit von einem äquivalenten Verteilerrohrdurchmesser (Dv) derart bemessen ist, dass eine Verringerung des Ladedruckes (p) innerhalb der Luftansauganlage (3) durch eine Expansion erzielbar ist, wobei die Expansion teilweise im Plenum (6), im jeweiligen Saugrohr (7) und/oder innerhalb des Verteilerrohres (4) stattfindet und die Ausgestaltung der Verteilerrohrlänge (Lv) in Abhängigkeit von einem äquivalenten Verteilerrohrdurchmesser (Dv) derart erfolgt, dass das Verhältnis von äquivalentem Verteilerrohrdurchmesser (Dv) zu Verteilerrohrlänge (Lv) 0,05 bis 0,14, oder 0,06 bis 0,13 beträgt.

2. Brennkraftmaschine (1) nach Anspruch 1, **dadurch gekennzeichnet, dass** die Verteilerrohrlänge (Lv) in Abhängigkeit von einer Nenndrehzahl ($n_N$) der Brennkraftmaschine (1) und/oder einer Saugrohrlänge ($L_S$) bemessen ist.

3. Brennkraftmaschine (1) nach einem der Ansprüche 1 bis 2, **dadurch gekennzeichnet, dass** die Ausgestaltung der Luftansauganlage (3) derart erfolgt, dass die Saugrohrlänge ($L_S$) kürzer als 200 mm, oder als 150 mm beträgt.

4. Brennkraftmaschine (1) nach einem der Ansprüche 1 bis 3, **dadurch gekennzeichnet, dass** Luftansauganlage (3) zwei Plenen (6) aufweist, wobei das Verteilerrohr (4) aus einem Verteilermodul (4a) und zwei Verteilerrohrabschnitten (4b) gebildet ist, wobei jeder Verteilerrohrabschnitt (4b) zwischen dem Verteilermodul (4a) und einem der Plenen (6) positioniert ist.

5. Brennkraftmaschine (1) nach einem der Ansprüche 1 bis 4, **dadurch gekennzeichnet, dass** die Brennkraftmaschine (1) als eine fremdgezündete Sechs-Zylinder-Brennkraftmaschine, insbesondere der Boxerbauart, ausgebildet ist, wobei die Anzahl der Zylinder (2) vier oder sechs beträgt.

6. Brennkraftmaschine (1) nach einem der Ansprüche 1 bis 5, **dadurch gekennzeichnet, dass** die Verteilerrohrlänge (Lv) größer als eine Länge $L_1$ ist, die durch eine erste Fromel: $L_1 = 200 - 4/3 * L_S + 1,7 * n_N^{-2,22} * (D_V - 30)$ bestimmt ist, wobei $L_S$ der jeweiligen Saugrohrlänge, $n_N$ der Nenndrehzahl der Brennkraftmaschine (1) und $D_V$ dem äquivalenten Verteilerrohrdurchmesser entspricht.

7. Brennkraftmaschine (1) nach einem der Ansprüche 1 bis 6, **dadurch gekennzeichnet, dass** die Verteilerrohrlänge (Lv) kleiner als eine Länge ($L_2$) ist, die durch eine zweite Formel: $L_2 = 7,2*10^6 / n_N - 1,5*L_S$ bestimmt ist, wobei $L_S$ der jeweiligen Länge des Saugrohres (7) und $n_N$ der Nenndrehzahl der Brennkraftmaschine (1) entspricht.

8. Brennkraftmaschine (1) nach einem der Ansprüche 1 bis 5, **dadurch gekennzeichnet, dass** die Verteilerrohrlänge (Lv) größer als eine Länge ($L_3$) ist, die durch eine dritte Fromel: $L_3 = 34 * D_v - 650 *4/3 L_s$ bestimmt ist, wobei $L_S$ der jeweiligen Saugrohrlänge und $D_V$ dem äquivalenten Verteilerrohrdurchmesser entspricht.

9.  Brennkraftmaschine (1) nach einem der Ansprüche 1 bis 8, **dadurch gekennzeichnet, dass** ein zweites schaltbares Verteilerrohr (12) angeordnet ist.

10. Brennkraftmaschine (1) nach einem der Ansprüche 6 bis 9, **dadurch gekennzeichnet, dass** wobei im zweiten Verteilerrohr (4) eine Schaltklappe (13) vorgesehen ist, mit der die Größe des äquivalenten Verteilerrohrdurchmessers ($D_V$) einstellbar ist.

11. Brennkraftmaschine (1) nach einem der Ansprüche 1 bis 10, **dadurch gekennzeichnet, dass** die Brennkraftmaschine (1) einen Abgasturbolader mit einer verstellbaren Turbinengeometrie aufweist.

12. Brennkraftmaschine (1) nach einem der Ansprüche 1 bis 11, **dadurch gekennzeichnet, dass** eine zusätzliche Erhöhung des Ladedruckes durch den Verdichter (8) einstellbar ist, wobei die eingestellten Ladedruckwerte 5 bis 15 % höher sind als ein Wert, der zwischen 0,9 und 1,5 bar liegt.

13. Brennkraftmaschine (1) nach einem der Ansprüche 1 bis 12, **dadurch gekennzeichnet, dass** die innerhalb der Luftansauganlage (3) erzielbare Expansion in Abhängigkeit von Betriebsparametern, insbesondere der Drehzahl ($n_N$) der Brennkraftmaschine (1), einstellbar ist.

## Claims

1.  Internal combustion engine (1) having a plurality of cylinders (2), an air intake system (3), a compressor (8) for feeding the combustion air, and a combustion chamber which is arranged in the cylinder (2) and which is delimited between a piston and a cylinder head, with

    - the air intake system (3) being formed from at least one distributor pipe (4), a plurality of intake pipes (7) and at least one plenum (6), with the plenum (6) being positioned between the distributor pipe (4) and the intake pipes (7), with
    - the combustion air being fed to the air intake system (3) via an air guiding duct (5) which opens out into the distributor pipe (4), and
    - with the charge pressure (p) of the combustion air being reduced between the outlet out of the compressor (8) and the inlet into the combustion chamber of the internal combustion engine (1),
    **characterized in that**
    - a distributor pipe length (Lv) is dimensioned as a function of an equivalent distributor pipe diameter (Dv) such that it is possible for a reduction in the charge pressure (p) to be obtained within the air intake system (3) by means of an expansion, with the expansion taking place partially in the plenum (6), in the respective intake pipe (7) and/or within the distributor pipe (4) and the distributor pipe length (Lv) is configured as a function of an equivalent distributor pipe diameter (Dv) such that the ratio of equivalent distributor pipe diameter (Dv) to distributor pipe length (Lv) is 0.05 to 0.14, or 0.06 to 0.13.

2.  Internal combustion engine (1) according to Claim 1, **characterized in that** the distributor pipe length (Lv) is dimensioned as a function of a nominal rotational speed ($n_N$) of the internal combustion engine (1) and/or of an intake pipe length ($L_s$).

3.  Internal combustion engine (1) according to either of Claims 1 and 2, **characterized in that** the air intake system (3) is configured such that the intake pipe length ($L_s$) is shorter than 200 mm, or than 150 mm.

4.  Internal combustion engine (1) according to one of Claims 1 to 3, **characterized in that** the air intake system (3) has two plenums (6), with the distributor pipe (4) being formed from a distributor module (4a) and two distributor pipe sections (4b), with each distributor pipe section (4b) being positioned between the distributor module (4a) and one of the plenums (6).

5.  Internal combustion engine (1) according to one of Claims 1 to 4, **characterized in that** the internal combustion engine (1) is embodied as a spark-ignition six-cylinder internal combustion engine, in particular of the Boxer type, with the number of cylinders (2) being four or six.

6.  Internal combustion engine (1) according to one of Claims 1 to 5, **characterized in that** the distributor pipe length (Lv) is greater than a length $L_1$ which is defined by a first formula: $L_1 = 200 - 4/3 * L_S + 1.7 * n_N^{-2.22} * (Dv - 30)$,

where $L_S$ corresponds to the respective intake pipe length, $n_N$ to the nominal rotational speed of the internal combustion engine (1) and $D_V$ to the equivalent distributor pipe diameter.

7. Internal combustion engine (1) according to one of Claims 1 to 6, **characterized in that** the distributor pipe length (Lv) is smaller than a length ($L_2$) which is defined by a second formula: $L_2 = 7.2*10^6 / n_N - 1.5 * L_S$, where $L_S$ corresponds to the respective length of the intake pipe (7) and $n_N$ to the nominal rotational speed of the internal combustion engine (1).

8. Internal combustion engine (1) according to one of Claims 1 to 5, **characterized in that** the distributor pipe length (Lv) is greater than a length ($L_3$) which is defined by a third formula: $L_3 = 34 * D_V - 650 * 4/3 L_S$, where $L_S$ corresponds to the respective intake pipe length and $D_V$ to the equivalent distributor pipe diameter.

9. Internal combustion engine (1) according to one of Claims 1 to 8, **characterized in that** a second switchable distributor pipe (12) is provided.

10. Internal combustion engine (1) according to one of Claims 6 to 9, **characterized in that** a switching flap (13) is provided in the second distributor pipe (4), by means of which switching flap (13) the size of the equivalent distributor pipe diameter ($D_V$) can be adjusted.

11. Internal combustion engine (1) according to one of Claims 1 to 10, **characterized in that** the internal combustion engine (1) has an exhaust-gas turbocharger with a variable turbine geometry.

12. Internal combustion engine (1) according to one of Claims 1 to 11, **characterized in that** an additional increase in the charge pressure by the compressor (8) can be adjusted, with the adjusted charge pressure values lying between 5 % and 15 % higher than a value which is between 0.9 bar and 1.5 bar.

13. Internal combustion engine (1) according to one of Claims 1 to 12, **characterized in that** the expansion which can be obtained within the air intake system (3) can be adjusted as a function of operating parameters, in particular the rotational speed ($n_N$) of the internal combustion engine (1).

**Revendications**

1. Moteur à combustion interne (1) comprenant plusieurs cylindres (2), un système d'admission d'air (3), un compresseur (8) pour refouler l'air comburant et une chambre de combustion disposée dans le cylindre (2), qui est limitée entre un piston et une culasse, dans lequel

   - le système d'admission d'air (3) est formé d'au moins un tube de distribution (4), de plusieurs tubes d'aspiration (7) et d'au moins un plénum (6), le plénum (6) étant positionné entre le tube de distribution (4) et les tubes d'aspiration (7),
   - l'air comburant pour le système d'admission d'air (3) est refoulé par le biais d'un canal de guidage d'air (5) qui débouche dans le tube de distribution (4), et
   - la pression de suralimentation (p) de l'air comburant est réduite après sa sortie du compresseur (8) jusqu'à l'entrée dans la chambre de combustion du moteur à combustion interne (1),
   **caractérisé en ce que**
   - une longueur du tube de distribution (Lv) est dimensionnée en fonction d'un diamètre équivalent du tube de distribution (Dv) de telle sorte qu'une réduction de la pression de suralimentation (p) à l'intérieur du système d'admission d'air (3) puisse être obtenue par expansion, l'expansion ayant lieu en partie dans le plénum (6), dans le tube d'aspiration respectif (7) et/ou à l'intérieur du tube de distribution (4) et la configuration de la longueur du tube de distribution (Lv) ayant lieu en fonction d'un diamètre équivalent du tube de distribution (Dv) de telle sorte que le rapport du diamètre équivalent du tube de distribution (Dv) à la longueur du tube de distribution (Lv) soit de 0,05 à 0,14, ou de 0,06 à 0,13.

2. Moteur à combustion interne (1) selon la revendication 1, **caractérisé en ce que** la longueur du tube de distribution (Lv) est dimensionnée en fonction d'une vitesse de rotation nominale ($\eta_N$) du moteur à combustion interne (1) et/ou d'une longueur du tube d'aspiration ($L_S$).

3. Moteur à combustion interne (1) selon l'une quelconque des revendications 1 à 2, **caractérisé en ce que** la configuration du système d'admission d'air (3) a lieu de telle sorte que la longueur du tube d'aspiration ($L_S$) soit inférieure à 200 mm ou soit de 150 mm.

4. Moteur à combustion interne (1) selon l'une quelconque des revendications 1 à 3, **caractérisé en ce que** le système d'admission d'air (3) présente deux plénums (6), le tube de distribution (4) étant formé d'un module de distribution (4a) et de deux sections de tube de distribution (4b), chaque section de tube de distribution (4b) étant positionnée entre le module de distribution (4a) et l'un des plénums (6).

5. Moteur à combustion interne (1) selon l'une quelconque des revendications 1 à 4, **caractérisé en ce que** le moteur à combustion interne (1) est réalisé sous forme de moteur à combustion interne à allumage par étincelle et à six cylindres, en particulier du type boxer, le nombre des cylindres (2) étant de quatre ou six.

6. Moteur à combustion interne (1) selon l'une quelconque des revendications 1 à 5, **caractérisé en ce que** la longueur du tube de distribution (Lv) est supérieure à une longueur $L_1$, qui est définie par une première formule : $L_1 = 200 - 4/3 * L_S + 1,7 * \eta_N^{-2,22} * (Dv - 30)$, $L_S$ étant la longueur respective du tube d'aspiration, $\eta N$ étant la vitesse de rotation nominale du moteur à combustion interne (1) et Dv correspondant au diamètre équivalent du tube de distribution.

7. Moteur à combustion interne (1) selon l'une quelconque des revendications 1 à 6, **caractérisé en ce que** la longueur du tube de distribution (Lv) est inférieure à une longueur ($L_2$) qui est définie par une deuxième formule : $L_2 = 7,2 * 10^6 / \eta_N - 1,5 * L_S$, $L_S$ étant la longueur respective du tube d'aspiration (7) et $\eta_N$ étant la vitesse de rotation nominale du moteur à combustion interne (1).

8. Moteur à combustion interne (1) selon l'une quelconque des revendications 1 à 5, **caractérisé en ce que** la longueur du tube de distribution (Lv) est supérieure à une longueur ($L_3$) qui est définie par une troisième formule : $L_3 = 34 * Dv - 650 * 4/3 L_S$, $L_S$ étant la longueur respective du tube d'aspiration et Dv correspondant au diamètre équivalent du tube de distribution.

9. Moteur à combustion interne (1) selon l'une quelconque des revendications 1 à 8, **caractérisé en ce qu'**un deuxième tube de distribution commutable (12) est prévu.

10. Moteur à combustion interne (1) selon l'une quelconque des revendications 6 à 9, **caractérisé en ce qu'**un clapet de commutation (13) est prévu dans le deuxième tube de distribution (4), avec lequel la dimension du diamètre équivalent du tube de distribution (Dv) peut être ajustée.

11. Moteur à combustion interne (1) selon l'une quelconque des revendications 1 à 10, **caractérisé en ce que** le moteur à combustion interne (1) présente un turbocompresseur à gaz d'échappement avec une géométrie de turbine réglable.

12. Moteur à combustion interne (1) selon l'une quelconque des revendications 1 à 11, **caractérisé en ce qu'**une augmentation supplémentaire de la pression de suralimentation peut être ajustée par le compresseur (8), les valeurs de pression de suralimentation ajustées étant supérieures de 5 à 15 % à une valeur située entre 0,9 et 1,5 bars.

13. Moteur à combustion interne (1) selon l'une quelconque des revendications 1 à 12, **caractérisé en ce que** l'expansion pouvant être obtenue à l'intérieur du système d'admission d'air (3) peut être ajustée en fonction de paramètres de fonctionnement, en particulier de la vitesse de rotation ($\eta_N$) du moteur à combustion interne (1).

6

4b

4a

3

7

7

7

Ladelufteitritt

4a

4b

6

7        7        7

zum Brennraum

Fig. 1

Fig. 2

Fig. 3

Fig. 4

Fig. 5

Fig. 6

Fig. 7

Fig. 8

Fig. 9

Fig. 10

Fig. 11

Temperatur der Ladeluft am Einlassventil bei Eilass schliesst
6Zyl.-Motor, Vollast im oberen Drehzahlbereich

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10002482 A1
- EP 0987412 A2
- EP 0790394 A2
- EP 1217187 A1
- DE 3627312 A1